# EUROPÄISCHE PATENTSCHRIFT

(11) **EP 4 182 211 B1**
(45) Veröffentlichungstag und Bekanntmachung des Hinweises auf die Patenterteilung: **12.08.2026**
(21) Anmeldenummer: 21730852.7
(22) Anmeldetag: 01.06.2021
(51) Int. Cl.: B62K 5/02, B62K 5/10

(54) **DREIRÄDRIGES FAHRZEUG MIT MEHRTEILIGEM RAHMEN**
THREE-WHEELED VEHICLE WITH MULTIPART FRAME
VÉHICULE À TROIS ROUES POURVU D'UN CADRE EN PLUSIEURS PARTIES

(30) Priorität: 15.07.2020 DE 102020118623
(43) Veröffentlichungstag der Anmeldung: 24.05.2023
(73) Patentinhaber: Bayerische Motoren Werke Aktiengesellschaft, 80809 München (DE)
(72) Erfinder: AUGUSTIN, Stephan, 80804 Muenchen (DE); BOBINGER, Robert, 86316 Hügelshart (DE); SCHUSTER, Gerd, 85764 Oberschleissheim (DE)
(86) Internationale Anmeldenummer: PCT/EP2021/064644
(87) Internationale Veröffentlichungsnummer: WO 2022/012811

(56) Entgegenhaltungen:
- WO-A1-2018/172784
- DE-A1- 10 054 273
- DE-A1- 102006 052 041
- DE-A1- 19 513 649
- JP-A- H09 272 481
- US-A- 3 504 934
- US-A- 3 931 989
- US-A- 3 995 875
- US-A- 4 789 173
- US-A- 5 678 835
- US-A1- 2009 289 437

## Beschreibung

Die Erfindung betrifft ein dreirädriges Fahrzeug, insbesondere ein Lastenrad, welches einen mehrteiligen und insbesondere zweigeteilten Rahmen aufweist, dessen Rahmenteile durch zumindest ein Gelenk verbunden sind und dessen zumindest eine Gelenk eine Schwenkachse bestimmt, um welche die Rahmenteile relativ zueinander bzw. gegeneinander verschwenkbar sind.

Lastenfahrräder werden in der heutigen Zeit und vor dem Hintergrund der Notwendigkeit neuer Konzepte und Lösungen für den Individualverkehr immer beliebter. Zu diesen bzw. allgemein zu dreirädrigen Fahrzeugen ist daher im Stand der Technik bereits eine Vielzahl von Umsetzungen bekannt.

Beispielsweise gibt es zwei- und dreirädrige Lastenfahrräder, wobei bei dreirädrigen Lastenfahrrädern ein Radpaar mit 2 Rädern vorne oder hinten angeordnet sein kann. Zu solchen Lastenrädern bzw. allgemein zu solchen dreirädrigen Fahrzeugen zählen nicht nur rein durch Pedale angetriebene Räder sondern ebenso E-Bikes, welche den mechanischen durch einen elektrischen Antrieb unterstützen, aber auch andere dreirädrige Fahrzeuge, welche beispielsweise ausschließlich durch einen Motor angetrieben werden.

Lastenräder, Fahrräder oder E-Bikes mit mehreren Rädern sind jedoch in der Regel lang, schwer und schwierig zu lenken. Besonders, wenn zusätzlich Last mitgeführt wird, kann es dazu kommen, dass diese als bewegte Masse an bzw. auf dem Fahrzeug wirkt und den Lenkbewegungen entgegenarbeitet, was zu kritischen bis hin zu gefährlichen und unkontrollierbaren Lenkmanövern und somit Unfällen führen kann.

Neben der schwierigen Lenkung kann der Rahmen durch die bewegten Massen bei Lastwechseln in Schwingung geraten, was auf Dauer zu Lasten der Steifigkeit und Stabilität des Rahmens gehen kann, so dass es zu einem Rahmenbruch kommen kann.

Aus diesem nachteilhaften und für viele Fahrer unerwarteten Verhalten ergibt sich, dass die im Stand der Technik bekannten Lastenräder bzw. dreirädrigen Fahrzeuge für Fahrer, welche ein gewöhnliches Fahrrad gewohnt sind, nicht intuitiv bedienbar sind. Entsprechend benötigen viele Fahrer zunächst eine gewisse Gewöhnung und Training, bevor die Lastenräder sicher bewegt werden können bzw. bevor die Lastenräder im Verkehr bewegt werden sollten.

Bei Fahrrädern mit zwei Rädern bzw. einem Radpaar an der Front ist teils eine aufwändige Achslenkung nötig. Varianten von Lastenrädern mit zwei Rädern bzw. einem Radpaar hinten, wie beispielsweise herkömmliche "Rikschas", sind oftmals starr ausgeführt, so dass der Rahmen des Fahrrades nicht in die Kurve geneigt werden kann.

Es gibt jedoch auch Varianten von dreirädrigen Fahrzeugen, bei welchen der gesamte Rahmen oder zumindest ein Teil und insbesondere der vordere Teil des Rahmens seitlich schwenkbar ist und dadurch bei Kurvenfahrten in die Kurve geneigt werden kann, was grundsätzlich eine ergonomischere und dynamischere Fahrweise ermöglichen soll und auch dem Verhalten eines "normalen" Fahrrades entspricht.

Solche Fahrzeuge mit zumindest teilweise schwenkbarem Rahmen sind beispielsweise aus den Dokumenten DE 10 2014 113 710 A1,
DE 10 2016 115 803 A1, EP 3 205 564 B1, DE 10 2016 120 697 B4,
FR 3 020 335 B1, JP 5995434 B2, KR 10-1197628, US 3,605,929 A,
US 6,104,154 A und WO 2011/107674 A1 bekannt.

Die gattungsgemäße WO 2018/172784 A1 betrifft ein Dreirad mit einem Vorderrad und zwei Hinterrädern, wobei der vordere Teil des Dreirads gegenüber dem Hinterteil verschwenkt werden kann. Entlang der Schwenkachse ist eine Antriebswelle orientiert.

Die US 3,995,875 A offenbart ein Dreirad mit einem Vorderrad und zwei Hinterrädern, welche an einem entsprechenden Rahmenteil des Dreirads angeordnet sind, und wobei der Rahmenteil derart gelagert und angeordnet ist, dass eine Art Knicklenkung bereitgestellt ist.

Die US 2009/289437 A1 betrifft ein Dreirad mit einem Vorderrad und zwei Hinterrädern, wobei die Hinterräder derart gelagert sind, dass sie sich bei Kurvenfahrt neigen können.

Die DE 100 54 273 A1 betrifft ein Liegedreirad, dass ein Hinterräder tragendes erstes Fahrgestellteil und ein mit einem Vorderrad verbundenes zweites Fahrgestellteil aufweist, das längs verstellbar ist, wobei die Fahrgestellteile an zwei getrennten Lagerstellen mittels Lagerelementen verbunden sind und wobei die Fahrgestellteile zueinander um eine Drehachse schwenkbar sind, die in Fahrtrichtung weist und zu dieser geneigt ist.

Die DE 10 2006 052 041 A1 betrifft ein Fahrzeug mit drei Rädern, zwei gegenläufig beweglichen Hinterradschwingen und einem Fahrzeugrahmen, der das Vorderrad und den Fahrersitz als starre Einheit miteinander verbindet, wobei der Lenkkopf des Fahrzeugs unterhalb des Fahrersitzes angeordnet ist und mit Steuerelementen die gegenläufige Bewegung der Hinterradschwingen an die Neigung des Fahrzeugrahmens koppelt, um eine Richtungsänderung des Fahrzeugs einzuleiten, wobei unterhalb des Fahrersitzes zwischen Lenkkopf und Hinterradschwinge Rückholfedern angeordnet sind, welche die horizontale Lage des Fahrzeugs stabilisieren, indem sie die Hinterradschwingen in eine ausgeglichene Mittellage zwingen, und wobei eine Schubstange am Fahrzeugrahmen befestigt wird, durch deren Verdrehung das Fahrzeug ohne ein weiteres Lenkgestänge von einem Fahrlehrer geneigt und gelenkt wird.

Die JP H09 272481 A betrifft Dreiräder mit einem Vorderrad und zwei Hinterrädern oder umgekehrt. Die Räder sind jeweils am Fahrzeugrahmen angeordnet. Es sind unterschiedliche Lösungen vorgeschlagen, die Fahrzeugrahmen zueinander oder aneinander zu lagern.

Die US 4, 789 172 A betrifft eine Art Liegerad mit zueinander schwenkbaren Rahmenteilen, an welchen die Räder befestigt sind.

Die US 5,678,835 A betrifft ein Dreirad mit einem Vorderrad und zwei Hinterrädern, wobei die jeweiligen Rahmenteile, an welchen die Räder angeordnet sind, zueinander schwenkbar sind.

Die US 3,931,989 A betrifft ein Dreirad mit einem Vorderteil mit einem Rad und einem Hinterteil mit zwei Rädern. Der Vorderteil kann gegenüber dem Hinterteil über ein Torsionsrohr verschwenkt werden.

Allerdings führt das Schwenken bei den bekannten Lösungen durch den jeweiligen Aufbau dazu, dass an dem Vorderrad beim Neigen in die Kurve seitliche Kräfte angreifen können, durch welche das Vorderrad aus seiner Bahn gelenkt wird, so dass es gegenüber seiner vorherigen Spur relativ zu dem Radpaar an der Hinterachse (den Hinterrädern) versetzt wird, was das Lenkverhalten negativ beeinflusst.

Zudem wird durch das Schwenken oftmals eine Hebelwirkung auf das Vorderrad erzeugt, durch welche dieses bei Kurvenfahrten nach unten gedrückt wird, was die Wahrscheinlichkeit, dass der Rahmen bzw. der schwenkbare vordere Teil des Rahmens umkippt, erhöht. Diese Hebelwirkung bzw. die durch die Hebelwirkung verursachte Kraft ist zudem von der Zuladung abhängig, so dass sich das Verhalten des Fahrzeugs abhängig von der Zuladung bzw. abhängig von den bewegten Massen stark ändern kann, was das Fahrzeug zusätzlich unberechenbar macht.

Der Erfindung liegt deshalb die Aufgabe zugrunde, die vorgenannten Nachteile zu überwinden und ein dreirädriges Fahrzeug bereitzustellen, welches ein Fahrverhalten ähnlich einem herkömmlichen Fahrrad aufweist und ein Neigen in eine Kurve ermöglicht.

Diese Aufgabe wird durch die Merkmalskombination gemäß Patentanspruch 1 gelöst.

Erfindungsgemäß wird ein Fahrzeug bzw. insbesondere ein Lastenrad vorgeschlagen, welches einen mehrteiligen und vorzugsweise zweiteiligen Rahmen, ein Einzelrad und ein Radpaar aufweist. Als ein solches durch das Einzelrad und das Radpaar dreirädriges Fahrzeug werden, neben einem rein durch Muskelkraft betriebenen Lastenrad, unter anderem auch dreirädrige E-Bikes, rein elektrisch angetriebene dreirädrige Fahrzeuge oder Hybrid-Lösungen verstanden. Als Einzelrad wird insbesondere ein einzelnes Rad verstanden, wobei auch mehrere als im Wesentlichen ein Rad wirkendende Räder ein Einzelrad darstellen können, was beispielsweise der Fall ist, wenn diese als Zwillingsrad ausgeführt sind oder der Abstand zwischen den Rad- bzw. Reifenaufstandsflächen sehr gering und beispielsweise unter 5 cm ist. Das Radpaar weist zwei insbesondere in eine Querrichtung des Fahrzeugs zueinander beabstandete Räder auf. Das Einzelrad ist mit einem ersten Rahmenteil des mehrteiligen Rahmens verbunden und die zwei Räder des Radpaares sind an einem zweiten Rahmenteil des Rahmens um eine gemeinsame Achse rotierbar gelagert. Die Verbindung des Einzelrades mit dem ersten Rahmenteils wird vorzugsweise über ein Zwischenelement, wie beispielsweise eine Radgabel, ausgeführt, so dass das Einzelrad insbesondere als Vorderrad und um eine Lenkachse schwenkbar mittels der Radgabel an dem ersten Rahmenteil fixiert ist. Entsprechend ist das Einzelrad dem ersten Rahmenteil und das Radpaar dem zweiten Rahmenteil zugeordnet. Weiter ist vorgesehen, dass der erste Rahmenteil und der zweite Rahmenteil durch zumindest ein Gelenk verbunden und gegeneinander um eine durch das zumindest eine Gelenk bestimmte Schwenkachse drehbar bzw. verdrehbar oder schwenkbar sind, so dass sich also der erste Rahmenteil relativ zu dem zweiten Rahmenteil um die Schwenkachse bewegen lässt. Die Schwenkachse verläuft erfindungsgemäß durch einen Aufstandspunkt des Einzelrades. Da Räder allenfalls in einem in der Realität nicht vorhandenen Idealfall nur an einem einzelnen eindimensionalen Punkt auf einem Untergrund bzw. der Fahrbahn aufstehen, wird als Aufstandspunkt, welcher auch als Radaufstandspunkt bezeichnet werden kann, nicht lediglich ein eindimensionaler Punkt sondern vielmehr auch die Aufstandsfläche bzw. ein innerhalb der Aufstandsfläche liegender idealisierter Aufstandspunkt des Einzelrades auf einer Fahrbahn bzw. einem Untergrund verstanden.

Dadurch, dass die Schwenkachse durch den Aufstandspunkt verläuft, findet ein Drehen des Einzelrades bei einem Verschwenken der Rahmenteile um den Aufstandspunkt statt, so dass es nicht zu einem Spurversatz und nicht zu einem Hebelmoment kommt. Dadurch wird beispielsweise auch ein freihändiges Fahren möglich. Durch den mit der Schwenkachse entkoppelten Hinterbau bzw. hinteren oder zweiten Rahmenteil wird das Gewicht einer auf dem zweiten Rahmenteil lastenden Ladung weder gelenkt noch in die Kurve geneigt, so dass diese Massen nicht als bewegte Masse wirken und das Verhalten des vorderen bzw. ersten Rahmenteils bzw. das Fahrverhalten des Fahrzeugs nicht negativ beeinflussen.

Die Schwenkachse verläuft vorzugsweise in einer Symmetrieebene des Fahrzeugs bzw. in einer Symmetrieebene des Rahmens oder zumindest des ersten Rahmenteils.

Wie zuvor erwähnt, handelt es sich bei dem Einzelrad vorzugsweise um ein Vorderrad, welches an einer Radgabel um eine Lenkachse schwenkbar mit dem ersten Rahmenteil verbunden ist. Entsprechend bilden die Räder des Radpaares die Hinterräder des Fahrzeugs. Da der Aufstandspunkt den niedrigsten Punkt des Einzelrades bzw. Vorderrades bildet, fällt die Schwenkachse vom Heck des Fahrzeugs her in Richtung des Vorderrades ab.

Die Erfindung sieht vor, dass der erste Rahmenteil und der zweite Rahmenteil durch zumindest zwei Gelenke verbunden sind, welche beabstandet zueinander auf der Schwenkachse angeordnet sind. Obgleich die Rahmenteile vorzugsweise ausschließlich durch die Gelenke verbunden sind, können sich Mittel zur Drehmomentübertragung oder zur Steuerung, wie beispielsweise Ketten, Bremsseile, elektrische Leitungen oder dergleichen, zwischen den Rahmenteilen erstrecken. Ein erstes Gelenk der zwei Gelenke ist ein Kugelgelenk. Ferner ist ein zweites Gelenk der zwei Gelenke ein Kugelgelenk.

Um den Verlauf der Schwenkachse beispielsweise bei einem Radwechsel des Einzelrades oder jeder anderen den Aufstandspunkt gegenüber der Schwenkachse verschiebenden Situation einstellen zu können, ist bei einer besonders vorteilhaften Weiterbildung eine Position des ersten Gelenks und/oder des zweiten Gelenks gegenüber dem ersten Rahmenteil und/oder dem zweiten Rahmenteil einstellbar. Vorzugsweise ist die Position oder die jeweilige Position des Gelenks in Horizontal- bzw. auf das Fahrzeug bezogen in Hochrichtung und/oder in Vertikal- bzw. auf das Fahrzeug bezogen in Längsrichtung einstellbar, so dass durch eine entsprechende Einstellbarkeit der Position bzw. durch eine entsprechende Verschiebbarkeit der Gelenke die Schwenkachse in einen den Aufstandspunkt schneidenden Verlauf verschoben bzw. gedreht werden kann.

Alternativ zu einer zwei bzw. zumindest zwei Gelenke aufweisenden Ausführung ist ebenso eine Variante vorteilhaft, bei welcher der erste Rahmenteil und der zweite Rahmenteil durch genau ein durch zumindest ein Radiallager gebildetes Gelenk verbunden sind. Obgleich in dem vorzugsweise genau einem Gelenk mehrere Radiallager und/oder Axiallager angeordnet sein können, zeichnet es sich dadurch aus, dass das Gelenk eine einzelne und vorzugsweise gekapselte Baugruppe bildet. Dadurch liegen die Lager des Gelenks zwar vergleichsweise nah beieinander, so dass die Kräfte nicht optimal abgestützt werden können, jedoch ergeben sich durch die bessere Kapselung andere Vorteile, wie beispielsweise ein besserer Schutz vor Verschmutzung, ein kompakterer Aufbau und eine einfachere Montierbarkeit.

Um den Winkel bei einem einzelnen ein Schwenken um die Schwenkachse erlaubenden Gelenk und dadurch den Verlauf der Schwenkachse durch den Aufstandspunkt einstellen zu können, ist ferner vorzugsweise vorgesehen, dass der Winkel des einzelnen Gelenks gegenüber dem ersten Rahmenteil und/oder dem zweiten Rahmenteil einstellbar ist, also das Gelenk selbst oder das Gelenk durch eine entsprechende Vorrichtung ausgebildet ist, um eine Querachse des Fahrzeugs verdreht zu werden.

Um ein Umfallen des Fahrzeugs bzw. des ersten Rahmenteils im Stillstand oder eine gefährliche Neigung des ersten Rahmenteils gegenüber dem zweiten Rahmenteil während der Fahrt zu verhindern, sieht eine weitere Ausgestaltung vor, dass das Fahrzeug ferner eine Begrenzungsvorrichtung umfasst, welche ausgebildet ist, eine Verdrehbarkeit des ersten Rahmenteils gegenüber dem zweiten Rahmenteil um die Schwenkachse zu begrenzen bzw. auf einen vorbestimmten Winkelbereich zu beschränken. Eine solche Begrenzungsvorrichtung kann beispielsweise auch ein einfacher Ständer sein, welcher im Stillstand des Fahrzeugs ausgeklappt werden kann und den ersten Rahmenteil gegen den Boden stützt. Alternativ kommt ebenso eine Fixiervorrichtung in Frage, welche beim Stillstand des Fahrzeugs den ersten Rahmenteil mit dem zweiten Rahmenteil starr verbindend angeordnet werden kann, so dass sich die Rahmenteile im Stillstand nicht mehr gegeneinander verdrehen bzw. verschwenken können. Neben solchen nur für den Stillstand geeigneten Vorrichtungen kommen auch weitere Alternativen in Frage, welche eine Verdrehbarkeit der Gelenke einschränken und dadurch auch eine Verschwenkung der Rahmenteile begrenzen.

Eine weitere alternative Ausgestaltung sieht vor, dass das Fahrzeug ferner eine Rückstellvorrichtung umfasst, welche ausgebildet ist, das erste Rahmenteil aus einer gegenüber einer vorbestimmten Mittelstellung ausgelenkten Stellung zurück in die Mittelstellung zu drehen bzw. zu schwenken. Die Mittelstellung entspricht dabei vorzugsweise einer Ruhestellung, in welcher sich der erste Rahmenteil und der zweite Rahmenteil bei einer ungelenkten Geradeausfahrt befinden bzw. jeweils vollständig aufgerichtet sind. Eine solche Rückstellvorrichtung kann beispielsweise durch Federn oder auch Gasdruckfedern realisiert sein. Insbesondere wenn ein Elastomerelement als eines der Gelenke vorgesehen ist, kann das Elastomerelement integral die Begrenzungsvorrichtung und/oder die Rückstellvorrichtung bilden. Eine solche Rückstellvorrichtung kann zudem eine Begrenzungsvorrichtung ergänzen oder vollständig ersetzen, da die Rückstellvorrichtung ein Rückstellmoment erzeugt, durch welches der Rahmen bzw. die Rahmenteile auch im Stillstand zueinander ausgerichtet werden.

Vorzugsweise weist das Fahrzeug ferner zumindest eine ein Drehmoment erzeugende Antriebsvorrichtung auf, bei welcher es sich beispielsweise um einen Motor oder um ein mit Muskelkraft betriebenes Pedalwerk handelt. Die Antriebsvorrichtung ist an dem ersten Rahmenteil oder unmittelbar an dem Einzelrad angeordnet und ausgebildet, das Drehmoment auf das Einzelrad zu übertragen. Alternativ ist die Antriebsvorrichtung an dem zweiten Rahmenteil oder unmittelbar an einem der Räder des Radpaares angeordnet und ausgebildet, das Drehmoment auf zumindest eines der Räder des Radpaares zu übertragen. Entsprechend sehen die Varianten vor, dass die Drehmomentübertragung von der Antriebsvorrichtung auf das jeweils angetriebene Rad oder das jeweils angetriebene Radpaar nicht über die Teilungsebene zwischen den Rahmenteilen erfolgt, sondern direkt im Bereich eines der Rahmenteile. Eine solche Antriebsvorrichtung kann zudem auch beispielsweise als Radnabenmotor vorgesehen sein, so dass die Antriebsvorrichtung auch beispielsweise unmittelbar in einer Radnabe des Einzelrades oder in eines der Räder des Radpaares angeordnet sein kann. Sollen die Hinterräder bzw. die Räder des Radpaares angetrieben werden, kann die Antriebsvorrichtung als zentraler Heck- oder Mittelmotor ausgebildet sein, wobei das Drehmoment zwischen den Rädern des Radpaares über eine Vorrichtung zur Drehmomentverteilung aufgeteilt und gesteuert werden kann (Torque-Vectoring).

Zusätzlich oder alternativ, kann das Fahrzeug ferner zumindest eine gegebenenfalls zweite ein Drehmoment erzeugende Antriebsvorrichtung aufweisen, bei welcher es sich wiederum um einen Motor oder auch eine Vorrichtung zum Antrieb mit Muskelkraft handeln kann. Die Antriebsvorrichtung ist an dem ersten Rahmenteil angeordnet und ausgebildet, das Drehmoment über eine Vorrichtung zur Drehmomentübertragung auf zumindest eines der Räder des Radpaares zu übertragen. Alternativ ist die Antriebsvorrichtung an dem zweiten Rahmenteil angeordnet und ausgebildet, ein Drehmoment über die Vorrichtung zur Drehmomentübertragung auf das Einzelrad zu übertragen. Bei dieser Variante ist also vorgesehen, dass die Drehmomentübertragung durch die entsprechende Vorrichtung über die Teilungsebene zwischen den Rahmenteilen hinweg erfolgt, wobei die Vorrichtung zur Drehmomentübertragung vorzugsweise ausgebildet ist, ein Verschwenken bzw. Verdrehen der Rahmenteile um die Schwenkachse ohne Schaden zu nehmen zuzulassen.

Eine weitere Variante sieht vor, dass eine Antriebsvorrichtung sowohl das Einzelrad als auch zumindest eines der Räder des Radpaares antreibt, wobei dann die Drehmomentübertragung mittels zumindest einer dafür geeigneten Vorrichtung erfolgt.

Das Fahrzeug kann auch mit einem seriellen Hybridantrieb versehen sein, bei welchem beispielsweise ein durch Muskelkraft getriebener Generator Strom erzeugt, welcher mittels entsprechender Leitungen über die Teilungsebene zwischen den Rahmenteilen hinweg auf eine elektrische Antriebsvorrichtung übertragen wird, welche zumindest eines der Räder antreibt.

Die Vorrichtung zur Drehmomentübertragung ist bei einer besonders vorteilhaften Variante eine Kardanwelle, welche sich zumindest im Bereich einer durch das zumindest eine Gelenk bestimmte Trennungsebene zwischen ersten Rahmenteil und zweiten Rahmenteil koaxial zu der Schwenkachse von dem ersten Rahmenteil zu dem zweiten Rahmenteil erstreckt. Da also die Kardanwelle koaxial zu der Schwenkachse ist, bleibt die Kardanwelle von einem Verschwenken der Rahmenteile zueinander im Wesentlichen unbeeinflusst. Ist beispielsweise ein einzelnes Gelenk vorgesehen, kann sich die Kardanwelle durch das Gelenk hindurch erstrecken.

Neben einer klassischen, starren und sich insbesondere durch Kardangelenke auszeichnenden Kardanwelle, kann alternativ auch eine flexible bzw. elastische Welle verwendet werden.

Alternativ ist die Vorrichtung zur Drehmomentübertragung bei einer ebenfalls vorteilhaften Ausbildung ein eine Kette aufweisendes Kettengetriebe, dessen Kette eine Verwindung um die Schwenkachse zulässt und ausgleicht bzw. dessen Kette ausgebildet ist, eine Verwindung um die Schwenkachse zumindest innerhalb eines vorbestimmten Bereichs zuzulassen und auszugleichen. Hierfür kann vorzugsweise eine Kettenführung und/oder ein Kettenspanner vorgesehen sein, durch welche sichergestellt wird, dass die Kette bei einem Verschwenken der Rahmenteile nicht von den zugehörigen Ritzeln springt.

Beispielsweise kann die mechanische Kraftübertragung bzw. die Drehmomentübertragung kraftoptimiert, leicht und preiswert mittels einer Fahrradkette erfolgen, welche eine Torsion zwischen einem vorderen Kettenblatt am ersten Rahmenteil und einem hinteren Ritzel am zweiten Rahmenteil von mindestens 45° ermöglicht und nur am vorderen Kettenblatt und am hinteren Ritzel jeweils oben und unten geführt werden muss, um ein Abspringen zu verhindern.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1a, 1b: eine erste Fahrzeugvariante aus Seiten- und Draufsicht;
- Fig. 2a, 2b: eine zweite Fahrzeugvariante aus Seiten- und Draufsicht;
- Fig. 3a, 3b: eine dritte Fahrzeugvariante aus Seiten- und Draufsicht;
- Fig. 4a: eine Ansicht eines Einzelrades in Mittelstellung und ausgelenkten Stellungen einer erfindungsgemäßen Fahrzeugvariante;
- Fig. 4b: eine Ansicht eines Einzelrades in Mittelstellung und ausgelenkten Stellungen eines Fahrzeugs des Stand der Technik;
- Fig. 5a-e: jeweils eine Antriebskonfiguration einer Fahrzeugvariante.

Die Figuren sind beispielhaft schematisch. Gleiche Bezugszeichen in den Figuren weisen auf gleiche funktionale und/oder strukturelle Merkmale hin.

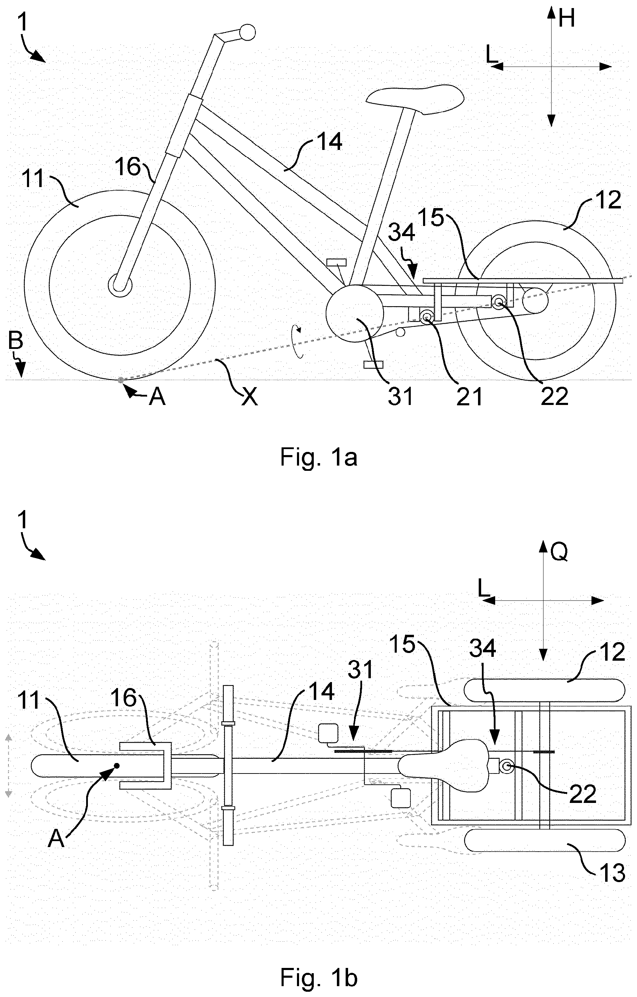

Die Figuren 1a bis 3b zeigen insgesamt drei Varianten eines erfindungsgemäß ausgeführten Fahrzeugs 1 jeweils aus einer Seitenansicht und einer Drauf- bzw. Aufsicht.

Die Fahrzeugvarianten verwenden jeweils unterschiedliche Gelenke 21, 22, 23 zur Ausbildung einer Schwenkachse X, um welche ein erster Rahmenteil 14 gegenüber einem zweiten Rahmenteil 15 eines Fahrzeugrahmens verschwenkbar ist, wobei die Schwenkachse X erfindungsgemäß jeweils durch einen Aufstandspunkt A des als Vorderrad ausgebildeten Einzelrades 11 auf bzw. mit dem Boden B verläuft.

Da das Gelenk 23 bzw. die Gelenke 21, 22 jeweils in einem Heckbereich bzw. an einem hinteren Bereich des Fahrzeugs 1 angeordnet sind und eine Trennungs- oder Teilungsebene zwischen dem ersten bzw. vorderen Rahmenteil 14 und dem zweiten bzw. hinteren Rahmenteil 15 bestimmen, ergibt sich dadurch ein von hinten nach vorne abfallender und den Aufstandspunkt A des Einzelrades 11 durschneidender Verlauf der Schwenkachse X.

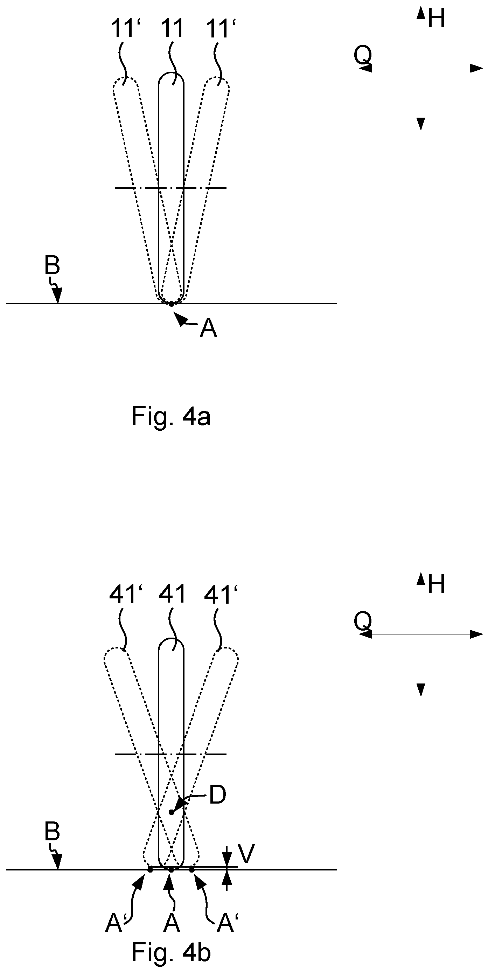

Zur besseren Orientierung in den Figuren ist sowohl in den Figuren 1a bis 3b als auch in den Figuren 4a bis 5e ein Koordinaten- bzw. Achsensystem dargestellt, welches die jeweiligen Achsen bezeichnet. Das sich auf das Fahrzeug beziehende Koordinatensystem definiert die Längsachse L des Fahrzeugs, die Hochachse H des Fahrzeugs und die Querachse Q des Fahrzeugs.

Da in den Figuren 1a bis 3b jeweils ein Lastenrad als beispielhafte Ausführung eines erfindungsgemäßen Fahrzeugs 1 dargestellt ist, ist das Vorderrad bzw. das Einzelrad 11 jeweils an einer Radgabel 16 gelagert und durch die Radgabel 16 um eine Lenkachse drehbar mit dem ersten bzw. vorderen Rahmenteil 14 verbunden. Zur Vereinfachung kann die Radgabel 16 als Teil des ersten Rahmenteils 14 gesehen werden.

Zum Antrieb des Fahrzeugs 1 ist in den Figuren 1a bis 3b jeweils ein Pedaltrieb bzw. Pedalwerk als Antriebsvorrichtung 31 vorgesehen, wie sie auch von herkömmlichen Fahrrädern bekannt ist. Entsprechend kann beispielsweise auch eine Gangschaltung vorgesehen sein. Zur Übertragung eines Drehmoments von der mit Muskelkraft betriebenen Antriebsvorrichtung 31 auf zumindest eines der Räder 11, 12, 13 ist vorliegend eine als Kettentrieb bzw. Kettengetriebe ausgebildete Vorrichtung zur Drehmomentübertragung 34 vorgesehen, so dass also das Drehmoment von der Antriebsvorrichtung 31 mittels einer über Ritzel laufende Kette auf eine zwischen den Rädern 12, 13 des Radpaares laufenden Achse übertragen wird, durch welche bei den in den Figuren 1a bis 3b dargestellten Beispielen die Hinterräder, also die Räder 12, 13 des Radpaares gleichermaßen angetrieben werden.

Da bei den Varianten gemäß den Figuren 1a bis 2b eine die Teilungsebene zwischen den Rahmenteilen 14 , 15 überspannende Kette vorgesehen ist, ist ferner ein Kettenspanner in den Figuren gezeigt, durch welchen eine vorbestimmte bzw. ausreichende Kettenspannung auch bei einer Torsion der Kette beim Verkippen der Rahmenteile 14 , 15 aufrecht erhalten wird. Vorzugsweise kann zudem eine Führungseinrichtung zur Führung der Kette vorgesehen sein.

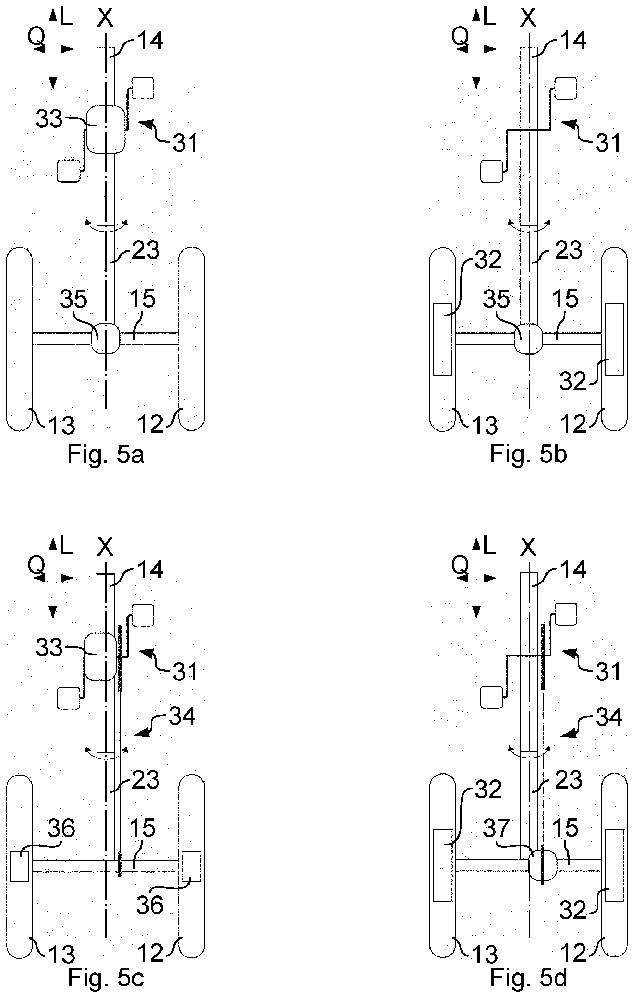

Hierbei handelt es sich lediglich um eine beispielhafte Antriebskonfiguration, wobei weitere Konfigurationen, beispielsweise gemäß den Figuren 5a bis 5e, möglich sind.

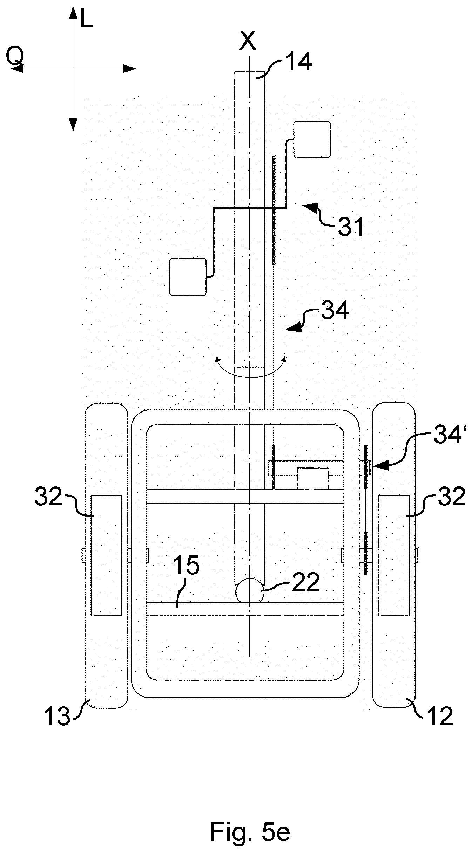

Ferner ist festzustellen, dass bei den in den Figuren 1a bis 3b gezeigten Varianten und darüber hinaus auch bei den Ausführung gemäß Figur 5e der hintere bzw. zweite Rahmenteil 15 integral eine aus der Draufsicht im wesentlichen rechteckige Struktur als Lastenträger ausgebildet ist, auf welcher also die durch das Lastenrad zu transportierenden Lasten unmittelbar oder beispielsweise über eine nicht dargestellte Aufnahme, wie einer Plattform, einem Korb oder Sitzen, an dem zweiten Rahmenteil 15 angeordnet werden können.

Bei der Variante gemäß den Figuren 1a und 1b wird die Verschwenkbarkeit bzw. Drehbarkeit des vorderen bzw. ersten Rahmenteils 14 gegenüber dem hinteren bzw. zweiten Rahmenteil 15, welcher sich über seine in Querrichtung Q des Fahrzeugs beabstandeten Räder 12, 13 gegen den Boden abstützt, durch zwei entlang der Schwenkachse X zueinander beabstandeten einzelnen Gelenken 21, 22 realisiert. Je weiter die einzelnen Gelenke 21, 22 entlang der Schwenkachse X beabstandet sind, desto besser können die zwischen den Rahmenteilen 14 ,15 wirkenden Kräfte abgestützt werden. Hierzu können auch noch weitere einzelne Gelenke vorgesehen werden. Vorliegend sind die beiden einzelnen Gelenke 21, 22 als Kugelgelenk bzw. Kugelkopfgelenk ausgebildet, welche seit langem im Stand der Technik bekannt sind und deren Aufbau daher nicht näher beschrieben werden soll. Diesbezüglich wird lediglich darauf verwiesen, dass ein Gelenkkopf des Kugelgelenks im Wesentlichen starr mit einem der Rahmenteile 14 ,15 verbunden ist und dass eine Gelenkpfanne, in welcher der Gelenkkopf mehrachsig drehbar gelagert ist, im Wesentlichen starr mit dem jeweils anderen Rahmenteil 14, 15 verbunden ist. Durch zumindest zwei solcher als Kugelgelenk ausgebildeten Gelenke 21, 22, werden deren Freiheitsgrade auf eine Drehbarkeit um die Schwenkachse X eingeschränkt.

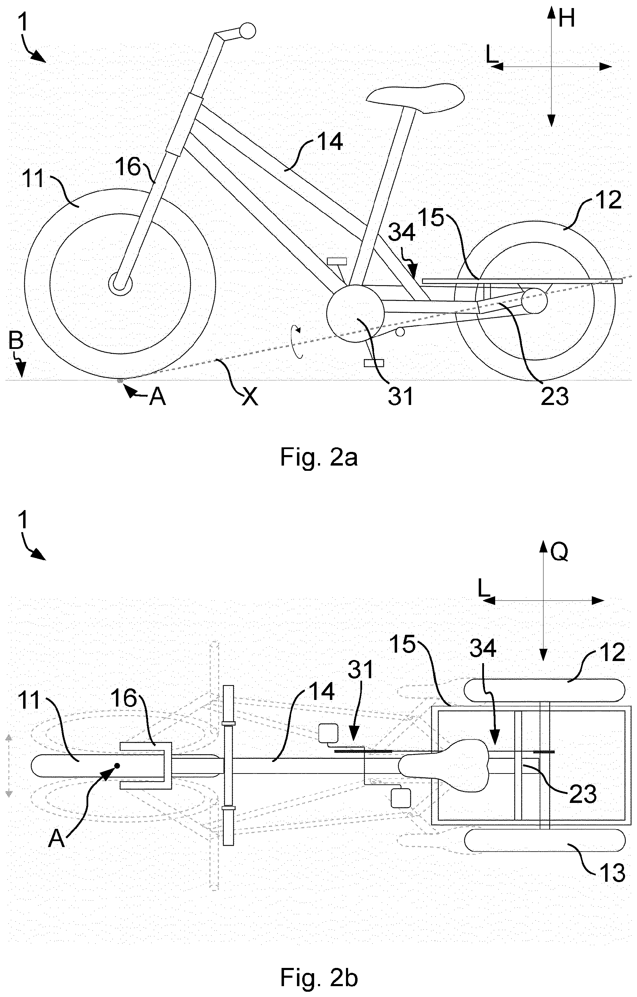

Abweichend davon sieht die nicht beanspruchte Variante gemäß den Figuren 2a und 2b keine zwei einzelnen Gelenke 21, 22 vor, sondern ausschließlich ein einzelnes Gelenk 23, welches durch ein längliches Radiallager bzw. Gelenk oder auch durch mehrere in einer Baueinheit gekapselte Radiallager bzw. Gelenke gebildet sein kann. Gegenüber der Ausführung der Figuren 1a und 1b ergibt sich dadurch eine bessere Kapselung des Gelenks 23, so dass dieses einfacher Verbaut werden kann und besser vor Verschmutzung geschützt ist. Allerdings ergibt sich dadurch meist eine im Vergleich zu der die Kräfte zwischen den Rahmenteilen 14 ,15 bei der Variante gemäß den Figuren 1a und 1b abstützenden Strecke, eine geringere Strecke zur Abstützung der Kräfte, welche im bei dem Fahrzeug 1 in den Figuren 2a und 2b der Länge des einzelnen Gelenks 23 entlang der Schwenkachse X entspricht.

Vorteilhaft bei den Varianten gemäß den Figuren 1a bis 2b ist auch, dass ein Fahrradsattel und die Antriebsvorrichtung 31 an dem vorderen bzw. ersten Rahmenteil 14 angeordnet sind und sich dadurch beim Schwenken bzw. Neigen des ersten Rahmenteils 14 mit einem auf dem Fahrzeug 1 bzw. auf dem Fahrradsattel sitzenden Fahrer in Kurven neigen, so dass sich ein Fahrgefühl wie bei einem herkömmlichen Rad einstellt.

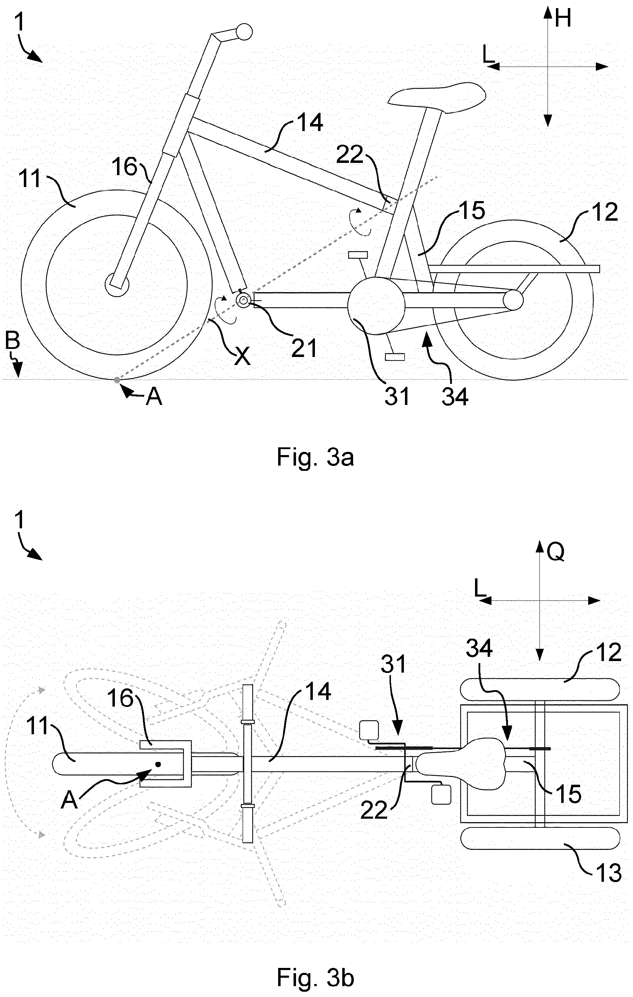

Die dritte Variante gemäß den Figuren 3a und 3b sieht abweichend vor, dass der erste Rahmenteil 14 und der zweite Rahmenteil 15 zwar wie bei der ersten Variante gemäß der Figuren 1a und 1b durch zwei einzelne Gelenke 21, 22 getrennt bzw. gegeneinander verschwenkbar geteilt werden, die Antriebsvorrichtung 31 und der Sattel jedoch nicht dem vorderen bzw. ersten Rahmenteil 14 sondern dem zweiten bzw. hinteren Rahmenteil 15 zugeordnet sind. Bei Kurvenfahrten bzw. allgemein bei einem Verschwenken des ersten Rahmenteils 14 gegenüber dem zweiten Rahmenteil 15 schwenkt der Fahrer dadurch zumindest mit seinem Unterleib nicht in die Kurvenlage ein, wodurch sich ein ungewohntes Fahrgefühl ergeben kann.

Bei dem Fahrzeug 1 gemäß der Figuren 3a und 3b ergibt sich zudem durch die Positionierung des ersten und zweiten Gelenks 21, 22 ein steilerer Verlauf der Schwenkachse X. Vorliegend ist das zweite Gelenk 22 an einem Übergang zwischen einem Oberrohr des ersten Rahmenteils 14 und einem Sitzrohr des zweiten Rahmenteils 15 angeordnet und das erste Gelenk 21 entlang dem Unterrohr, welches von dem ersten Gelenk 21 geteilt wird, so dass ein Teil des Unterrohrs dem ersten Rahmenteil 14 und ein zweiter Teil des Unterrohrs dem zweiten Rahmenteil 15 zugeordnet ist.

Obgleich als erstes Gelenk 21 in den Figuren 3a und 3b ein Kugelgelenk und für das zweite Gelenk 22 ein Elastomerelement vorgesehen ist, sind erfindingsgemäß für beide Gelenke 21 Kugelgelenke vorgesehen werden.

Ein steilerer Verlauf der Schwenkachse X kann bei den Varianten gemäß den Figuren 1 und 2 beispielsweise durch eine Verschiebung der Gelenke 21, 22 bzw. des Gelenks 23 entlang der Hochachse H nach oben bzw. durch eine Verschiebung des gesamten Aufbaus des zweiten Rahmenteils 15 entlang der Hochachse H nach oben erreicht werden, wobei durch letzteres die Transportfläche und der gesamte Schwerpunkt des Fahrzeugs 1 verschoben wird.

In der in Figur 1b dargestellten Aufsicht bzw. den jeweiligen Aufsichten der Varianten in den Figuren 1b, 2b, 3b sind neben der Mittel-, Ruhe- oder Neutralstellung des ersten Rahmenteils 14, welche mit durchgehender Linie dargestellt ist, auch beispielhaft gegenüber dem zweiten Rahmenteil 15 ausgelenkten bzw. verschwenkte Stellungen des ersten Rahmenteils 14 mit gestrichelten Linien dargestellt. Dabei wird deutlich, dass der Aufstandspunkt A sich nicht oder zumindest im Wesentlichen nicht verschiebt und sich der vordere bzw. erste Rahmenteil 14 ohne Änderung der Spur seines Einzelrades 14 gegenüber dem hinteren bzw. zweiten Rahmenteil 15 in die Querrichtung Q des Fahrzeugs kippen bzw. drehen bzw. verschwenken lässt.

Bei einer Änderung der Fahrzeuggeometrie, beispielsweise durch Druckverlust im Einzelrad 11 oder Wechsel des Einzelrades 11, kann es dazu kommen, dass sich der Aufstandspunkt A des Einzelrades 11 verschiebt, so dass die durch die Gelenke 21, 22, 23 bestimmte Schwenkachse X nicht mehr bzw. nicht mehr exakt durch den Aufstandspunkt A verlaufen würde. Daher ist vorgesehen, dass die Gelenke 21, 22, 23 einstellbar sind, was jedoch in den Figuren nicht dargestellt ist. Bei der Variante gemäß Figur 1 ist hierzu eine Position des ersten Gelenks 21 und/oder des zweiten Gelenks 22 in Längsrichtung L und/oder Hochrichtung H des Fahrzeugs veränderbar, so dass sich durch eine entsprechende Positionsänderung bzw. Positionsverschiebung der Verlauf der Schwenkachse X auf einen neuen Aufstandspunkt A einstellen lässt. Gleiches gilt auch für ein einzelnes Gelenk 23 gemäß der Ausführung der Figuren 2a und 2b, wobei hier alternativ zu einer Einstellbarkeit der Position auch eine Einstellbarkeit des Winkels vorgesehen sein kann, so dass der Winkel des Gelenks 23 gegenüber dem ersten Rahmenteil 13 und/oder dem zweiten Rahmenteil 15 in der Variante gemäß den Figuren 2a und 2b verändert und dadurch der Verlauf der Schwenkachse X eingestellt werden kann.

Zur Verdeutlichung des sich aus der erfindungsgemäßen Ausführung ergebenden Unterschieds gegenüber dem Stand der Technik, ist in Figur 4a das Einzelrad 11 eines erfindungsgemäßen Fahrzeugs 1 und in Figur 5a ein Einzelrad 41 eines aus dem Stand der Technik bekannten Fahrzeugs dargestellt. Durch ein Verkippen des ersten Rahmenteils 14 gegenüber dem zweiten Rahmenteil 15, wie es beispielsweise bei den Varianten gemäß den Figuren 1a bis 3b vorgesehen ist, neigt sich das Einzelrad 11 bzw. das Vorderrad um den Aufstandspunkt A, so dass dieser als Drehpunkt für das Einzelrad 11 wirkt. Entsprechend wird das Einzelrad 11 beim Übergang seine verkippten Stellungen 11' um einen in der Ebene des Bodens B liegenden Drehpunkt gedreht, was dem Verhalten eines normalen Rades entspricht.

Davon abweichend zeigt Figur 4b das Verhalten eines Fahrzeugs des Stands der Technik, welches ebenfalls einen geteilten Rahmen aufweist, wobei die Schwenkachse des dortigen vorderen Rahmenteils gegenüber dem dortigen hinteren Rahmenteils nicht durch den Aufstandspunkt A des Einzelrades 41 auf dem Boden sondern beispielsweise parallel zum Boden verläuft, so dass sich für das Einzelrad 41 bei dem Verschwenken der Rahmenteile ein Drehpunkt D ergibt. Beim Verkippen der Rahmenteile dreht sich das Einzelrad 41 in seine verkippten Stellungen 41', wobei sich dadurch den Aufstandspunkt A in Querrichtung Q verschiebt, so dass sich abweichende Aufstandspunkte A' bzw. eine Spurverschiebung des Einzelrades 41 ergibt. Aufgrund der Schwerkraft bleibt das Einzelrad 41 mit dem Boden B in Kontakt. Würde das Einzelrad um seine Drehachse bzw. um seinen Drehpunkt D fixiert, würde sich gegenüber dem Boden B bei der Drehung ein Höhenversatz H ergeben.

Die Figuren 5a bis 5e zeigen beispielhaft verschiedene Antriebskonzepte, welche bei dem erfindungsgemäßen Fahrzeug verwendet werden können. Dabei entspricht der prinzipielle Aufbau des in den Figuren 5a bis 5e lediglich abschnittsweise dargestellten Fahrzeugs 1 dem Aufbau eines Fahrzeugs 1 gemäß den Varianten der Figuren 1a bis 3b.

In den Antriebskonzepten gemäß den Figuren 5a und 5b ist als Vorrichtung zur Drehmomentübertragung eine Kardanwelle vorgesehen, welche sich von dem ersten Rahmenteil 14 in den zweiten Rahmenteil 15 erstreckt, wobei die Kardanwelle innerhalb der Rahmenteile 14, 15 verläuft und daher nicht sichtbar ist. Zumindest im Bereich des Übergangs zwischen erstem Rahmenteil 14 und zweitem Rahmenteil 15 verläuft die Kardanwelle koaxial zu der Schwenkachse X.

In Figur 5a bzw. bei dem in Figur 5a abschnittsweise gezeigten Fahrzeug ist neben einer muskelkraftbetriebenen Antriebsvorrichtung 31 ein beispielsweise als Elektromotor ausgeführter Mittelmotor 33 als zweite Antriebsvorrichtung vorgesehen, wobei die beiden Antriebsvorrichtungen ein durch sie erzeugtes Drehmoment über die Kardanwelle von Bereich des ersten Rahmenteils 14 auf ein Differential 35 im Bereich des zweiten Rahmenteils 15 übertragen, durch welches das Drehmoment auf die beiden Hinterräder bzw. auf die Räder 12, 13 des Radpaares verteilt wird.

Statt einem Mittelmotor 33 sind bei der Variante gemäß Figur 5b zwei Radnabenmotoren 32 vorgesehen, wobei jedem der Räder 12, 13 des Radpaares ein Radnabenmotor 32 zugeordnet ist.

Statt einer Kardanwelle sehen die Ausführungen gemäß den Figuren 5c und 5d einen Kettentrieb bzw. ein Kettengetriebe 34 als Vorrichtung zur Drehmomentübertragung vor, wobei die Kette des Kettentriebs 34 ausgebildet ist, sich innerhalb eines vorbestimmten Winkelbereichs um die Schwenkachse X verdrehen bzw. tordieren zu lassen ohne Schaden zunehmen.

Statt eines zentral angeordneten Differentials 35 sieht die Weiterbildung gemäß Figur 5c in jedem der Räder 12, 13 des Radpaares eine Freilaufnabe 36 vor, welche gemeinsam wie ein Differential 35 wirken. Zudem ist bei dieser Variante ein Mittelmotor 33 vorgesehen.

Statt eines Mittelmotors 33 sieht das Antriebskonzept gemäß Figur 5d jeweils einen den Rädern 12, 13 des Radpaares zugeordneten Radnabenmotor 32 sowie ein kettengetriebenes Differential 37 vor.

Figur 5e stellt ein weiteres Antriebskonzept dar, bei welchen ein Drehmoment von einer mit muskelkraftbetriebenen Antriebsvorrichtung 31, welche vorliegend als Tretlager bzw. als Pedalwerk ausgeführt ist, mittels einer um die Schwenkachse X tordierbaren Kette eines Kettengetriebes 34 über die Teilungsebene des Rahmens hinweg von dem ersten Rahmenteil 14 auf ein zweites Kettengetriebe 34' an dem zweiten Rahmenteil 15 übertragbar ist. Das zweite Kettengetriebe 34' stellt über eine Querverlaufende Antriebswelle und eine zweite Kette eine Drehmomentübertragung auf das in der Bildebene rechte Rad 12 der Räder 12, 13 des Radpaares bereit, in welchem ein Radnabenmotor 32 als "Master" vorgesehen ist. Die beiden Räder 12, 13 des Radpaares sind nicht über eine gemeinsame Achse oder Welle sondern jeweils getrennt bzw. einzeln am Gepäckrahmen bzw. am zweiten Rahmenteil 15 befestigt. Das in der Bildebene linke Rad 13 verfügt ebenfalls über einen Radnabenmotor 32, der jedoch als "Slave" konfiguriert ist. Abhängig von einem von den Kettentrieben 34, 34' auf den als "Master" konfigurierten Radnabenmotor 32 des rechten Rades 12 übertragenen Drehmoment und/oder abhängig von einer z.B. über einen "Gas"-Hebel einstellbaren Steuerung, kann der als "Slave" konfigurierte Radnabenmotor 32 des linken Rades 13 angesteuert und das linke Rad 13 angetrieben werden.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Fahrzeug (1), insbesondere Lastenrad, mit einem mehrteiligen Rahmen, einem Einzelrad (11) und einem Radpaar, mit zwei zueinander beabstandeten Rädern (12, 13),
wobei das Einzelrad (11) mit einem ersten Rahmenteil (14) des Rahmens verbunden ist
und wobei die zwei Räder (12, 13) des Radpaares an einem zweiten Rahmenteil (15) des Rahmens um eine gemeinsame Achse rotierbar gelagert sind,
wobei der erste Rahmenteil (14) und der zweite Rahmenteil (15) durch zwei Gelenke (21, 22) verbunden und gegeneinander um eine durch die zwei Gelenke (21, 22) bestimmte Schwenkachse (X) drehbar sind,
wobei die Gelenke (21, 22) beabstandet zueinander auf der Schwenkachse (A) angeordnet sind,
wobei die Schwenkachse (X) durch einen Aufstandspunkt (A) des Einzelrades (11) verläuft, **dadurch gekennzeichnet dass** ein erstes Gelenk (21) der zwei Gelenke (21, 22) ein Kugelgelenk ist, und
wobei ein zweites Gelenk (22) der zwei Gelenke (21, 22) ein Kugelgelenk ist.

2. Fahrzeug nach Anspruch 1,
wobei das Einzelrad (11) ein Vorderrad ist und das Vorderrad an einer Radgabel (16) um eine Lenkachse schwenkbar mit dem ersten Rahmenteil (15) verbunden ist.

3. Fahrzeug nach dem vorhergehenden Anspruch,
wobei eine Position des ersten Gelenks (21) und/oder des zweiten Gelenks (22) gegenüber dem ersten Rahmenteil (14) und/oder dem zweiten Rahmenteil (15) einstellbar ist.

4. Fahrzeug nach einem der vorhergehenden Ansprüche,
ferner umfassend eine Begrenzungsvorrichtung, welche ausgebildet ist, eine Verdrehbarkeit des ersten Rahmenteils (14) gegenüber dem zweiten Rahmenteil (15) um die Schwenkachse (A) zu begrenzen,
und/oder ferner umfassend eine Rückstellvorrichtung, welche ausgebildet ist, das erste Rahmenteil (14) aus einer gegenüber einer vorbestimmten Mittelstellung ausgelenkten Stellung zurück in die Mittelstellung zu drehen.

5. Fahrzeug nach einem der vorhergehenden Ansprüche,
ferner aufweisend zumindest eine ein Drehmoment erzeugende Antriebsvorrichtung (31, 32, 33),
welche an dem ersten Rahmenteil (14) oder unmittelbar an dem Einzelrad (11) angeordnet und ausgebildet ist, das Drehmoment auf das Einzelrad (11) zu übertragen,
oder welche an dem zweiten Rahmenteil (15) oder unmittelbar an einem der Räder (12, 13) des Radpaares angeordnet und ausgebildet ist, das Drehmoment auf zumindest eines der Räder (12, 13) des Radpaares zu übertragen.

6. Fahrzeug nach einem der vorhergehenden Ansprüche,
ferner aufweisend zumindest eine ein Drehmoment erzeugende Antriebsvorrichtung (31, 32, 33),
welche an dem ersten Rahmenteil (14) angeordnet und ausgebildet ist, das Drehmoment über eine Vorrichtung zur Drehmomentübertragung (34) auf zumindest eines der Räder (12, 13) des Radpaares zu übertragen,
oder welche an dem zweiten Rahmenteil (15) angeordnet und ausgebildet ist, ein Drehmoment über die Vorrichtung zur Drehmomentübertragung (34) auf das Einzelrad (11) zu übertragen.

7. Fahrzeug nach dem vorhergehenden Anspruch,
wobei die Vorrichtung zur Drehmomentübertragung (34) eine Kardanwelle ist, welche sich zumindest im Bereich einer durch das zumindest eine Gelenk (21, 22, 23) bestimmte Trennungsebene zwischen ersten Rahmenteil (14) und zweiten Rahmenteil (15) koaxial zu der Schwenkachse (A) von dem ersten Rahmenteil (14) zu dem zweiten Rahmenteil (15) erstreckt.

8. Fahrzeug nach dem vorhergehenden Anspruch 6,
wobei die Vorrichtung zur Drehmomentübertragung (34) ein eine Kette aufweisendes Kettengetriebe (34) ist, dessen Kette eine Verwindung um die Schwenkachse (A) zulässt und ausgleicht.

## Claims

1. Vehicle (1), in particular cargo bicycle, with a multi-part frame, a single wheel (11) and a wheel pair, with two mutually spaced wheels (12, 13),
wherein the single wheel (11) is connected to a first frame part (14) of the frame and wherein the two wheels (12, 13) of the wheel pair are rotatably mounted on a second frame part (15) of the frame about a common axis,
wherein the first frame part (14) and the second frame part (15) are connected by two joints (21, 22) and are rotatable relative to each other about a pivot axis (X) defined by the two joints (21, 22),
wherein the joints (21, 22) are arranged spaced apart from each other on the pivot axis (A), wherein the pivot axis (X) extends through a contact point (A) of the single wheel (11),
**characterized in that** a first joint (21) of the two joints (21, 22) is a ball joint, and
wherein a second joint (22) of the two joints (21, 22) is a ball joint.

2. Vehicle according to claim 1,
wherein the single wheel (11) is a front wheel and the front wheel is connected to the first frame part (15) pivotably about a steering axis on a wheel fork (16).

3. Vehicle according to the preceding claim,
wherein a position of the first joint (21) and/or of the second joint (22) relative to the first frame part (14) and/or the second frame part (15) is adjustable.

4. Vehicle according to one of the preceding claims,
further comprising a limiting device, which is configured to limit a rotatability of the first frame part (14) relative to the second frame part (15) about the pivot axis (A),
and/or further comprising a restoring device, which is configured to rotate the first frame part (14) from a position deflected relative to a predetermined central position back into the central position.

5. Vehicle according to one of the preceding claims,
further comprising at least one torque-generating drive device (31, 32, 33),
which is arranged on the first frame part (14) or directly on the single wheel (11) and is configured to transmit the torque to the single wheel (11),
or which is arranged on the second frame part (15) or directly on one of the wheels (12, 13) of the wheel pair and is configured to transmit the torque to at least one of the wheels (12, 13) of the wheel pair.

6. Vehicle according to one of the preceding claims,
further comprising at least one torque-generating drive device (31, 32, 33),
which is arranged on the first frame part (14) and is configured to transmit the torque via a device for torque transmission (34) to at least one of the wheels (12, 13) of the wheel pair, or which is arranged on the second frame part (15) and is configured to transmit a torque via the device for torque transmission (34) to the single wheel (11).

7. Vehicle according to the preceding claim,
wherein the device for torque transmission (34) is a cardan shaft, which extends at least in the region of a separation plane defined by the at least one joint (21, 22, 23) between first frame part (14) and second frame part (15) coaxially to the pivot axis (A) from the first frame part (14) to the second frame part (15).

8. Vehicle according to the preceding claim 6,
wherein the device for torque transmission (34) is a chain transmission (34) comprising a chain, the chain of which permits and compensates for a torsion about the pivot axis (A).

## Revendications

1. Véhicule (1), en particulier vélo cargo, avec un cadre en plusieurs parties, une roue unique (11) et une paire de roues, avec deux roues (12, 13) espacées l'une de l'autre,
dans lequel la roue unique (11) est reliée à une première partie de cadre (14) du cadre et dans lequel les deux roues (12, 13) de la paire de roues sont montées de manière rotative sur une deuxième partie de cadre (15) du cadre autour d'un axe commun,
dans lequel la première partie de cadre (14) et la deuxième partie de cadre (15) sont reliées par deux articulations (21, 22) et sont rotatives l'une par rapport à l'autre autour d'un axe de pivotement (X) déterminé par les deux articulations (21, 22),
dans lequel les articulations (21, 22) sont disposées espacées l'une de l'autre sur l'axe de pivotement (A),
dans lequel l'axe de pivotement (X) s'étend à travers un point de contact (A) de la roue unique (11),
**caractérisé en ce qu'**une première articulation (21) des deux articulations (21, 22) est une articulation à rotule, et
dans lequel une deuxième articulation (22) des deux articulations (21, 22) est une articulation à rotule.

2. Véhicule selon la revendication 1,
dans lequel la roue unique (11) est une roue avant et la roue avant est reliée à la première partie de cadre (15) de manière pivotante autour d'un axe de direction sur une fourche de roue (16).

3. Véhicule selon la revendication précédente,
dans lequel une position de la première articulation (21) et/ou de la deuxième articulation (22) par rapport à la première partie de cadre (14) et/ou à la deuxième partie de cadre (15) est réglable.

4. Véhicule selon l'une des revendications précédentes,
comprenant en outre un dispositif de limitation, qui est configuré pour limiter une capacité de rotation de la première partie de cadre (14) par rapport à la deuxième partie de cadre (15) autour de l'axe de pivotement (A),
et/ou comprenant en outre un dispositif de rappel, qui est configuré pour faire tourner la première partie de cadre (14) d'une position déviée par rapport à une position centrale prédéterminée de retour dans la position centrale.

5. Véhicule selon l'une des revendications précédentes,
comprenant en outre au moins un dispositif d'entraînement (31, 32, 33) générant un couple, qui est disposé sur la première partie de cadre (14) ou directement sur la roue unique (11) et est configuré pour transmettre le couple à la roue unique (11),
ou qui est disposé sur la deuxième partie de cadre (15) ou directement sur l'une des roues (12, 13) de la paire de roues et est configuré pour transmettre le couple à au moins l'une des roues (12, 13) de la paire de roues.

6. Véhicule selon l'une des revendications précédentes,
comprenant en outre au moins un dispositif d'entraînement (31, 32, 33) générant un couple, qui est disposé sur la première partie de cadre (14) et est configuré pour transmettre le couple par l'intermédiaire d'un dispositif de transmission de couple (34) à au moins l'une des roues (12, 13) de la paire de roues,
ou qui est disposé sur la deuxième partie de cadre (15) et est configuré pour transmettre un couple par l'intermédiaire du dispositif de transmission de couple (34) à la roue unique (11).

7. Véhicule selon la revendication précédente,
dans lequel le dispositif de transmission de couple (34) est un arbre à cardan, qui s'étend au moins dans la région d'un plan de séparation déterminé par la au moins une articulation (21, 22, 23) entre première partie de cadre (14) et deuxième partie de cadre (15) coaxialement à l'axe de pivotement (A) de la première partie de cadre (14) à la deuxième partie de cadre (15).

8. Véhicule selon la revendication précédente 6,
dans lequel le dispositif de transmission de couple (34) est une transmission par chaîne (34) comprenant une chaîne, dont la chaîne permet et compense une torsion autour de l'axe de pivotement (A).
